# EUROPÄISCHE PATENTSCHRIFT

(11) **EP 3 649 794 B1**
(45) Veröffentlichungstag und Bekanntmachung des Hinweises auf die Patenterteilung: **09.02.2022**
(21) Anmeldenummer: 18729396.4
(22) Anmeldetag: 04.06.2018
(51) Int. Cl.: H04W 4/02, G06K 9/00, G05D 1/02, G01C 21/32

(54) **VERFAHREN, FAHRERASSISTENZSYSTEM UND COMPUTERPROGRAMM ZUR VERIFIZIERUNG EINER DIGITALEN KARTE EINES HÖHER AUTOMATISIERTEN FAHRZEUGS (HAF), INSBESONDERE EINES HOCHAUTOMATISIERTEN FAHRZEUGS**
METHOD, DRIVER ASSISTANCE SYSTEM AND COMPUTER PROGRAM FOR VERIFYING A DIGITAL MAP OF A MORE HIGHLY AUTOMATED VEHICLE (HAF), IN PARTICULAR OF A HIGHLY AUTOMATED VEHICLE
PROCÉDÉ, SYSTÈME D'AIDE À LA CONDUITE ET PROGRAMME POUR FAIRE VÉRIFIER LA CARTE NUMÉRIQUE D'UN VÉHICULE TRÈS AUTOMATISÉ, EN PARTICULIER D'UN VÉHICULE FORTEMENT AUTOMATISÉ

(30) Priorität: 07.07.2017 DE 102017211607
(43) Veröffentlichungstag der Anmeldung: 13.05.2020
(73) Patentinhaber: Robert Bosch GmbH, 70442 Stuttgart (DE)
(72) Erfinder: HASBERG, Carsten, 74360 Ilsfeld-Auenstein (DE); PAULS, Jan-Hendrik, 71723Grossbottwar (DE)
(86) Internationale Anmeldenummer: PCT/EP2018/064647
(87) Internationale Veröffentlichungsnummer: WO 2019/007606

(56) Entgegenhaltungen:
- DE-A1-102004 010 197
- DE-A1-102008 046 683

## Beschreibung

Die Erfindung betrifft ein Verfahren und ein Computerprogramm zur Verifizierung einer digitalen Karte eines

höher automatisierten Fahrzeugs (HAF), insbesondere eines hochautomatisierten Fahrzeugs und ein Fahrerassistenzsystem zur Steuerung eines höher automatisierten Fahrzeugs (HAF), insbesondere eines hochautomatisierten Fahrzeugs.

### Stand der Technik

Angesichts einer Zunahme des Automatisierungsgrades von Fahrzeugen werden immer komplexere Fahrerassistenzsysteme eingesetzt. Für solche Fahrerassistenzsysteme und Funktionen, wie z.B. dem hochautomatisierten Fahren oder dem vollautomatisiertem Fahren, wird eine große Zahl von Sensoren im Fahrzeug benötigt, die eine exakte Erfassung des Fahrzeugumfelds ermöglichen.

Im Folgenden werden unter höher automatisiert all diejenigen Automatisierungsgrade verstanden, die im Sinne der Bundesanstalt für Straßenwesen (BASt) eine automatisierte Längs- und Querführung mit steigender Systemverantwortung entsprechen, z.B. das hoch- und vollautomatisierte Fahren.

Im Stand der Technik ist eine Vielzahl von Möglichkeiten offenbart, ein Verfahren zum Betreiben eines hochautomatisierten Fahrzeugs (HAF) durchzuführen. Um dabei die Lokalisierung eines hochautomatisierten Fahrzeugs (HAF) in einer digitalen Karte zu erhöhen, ist es erforderlich, die Genauigkeit der digitalen Karte garantieren zu können, wobei hier das Problem auftritt, dass kurzfristige Streckenänderungen, die beispielsweise durch Baustellen, Unfälle oder andersartige Umstände bedingt sind, nicht oder nur unvollständig in digitalen Karten berücksichtigt werden können oder derart kurzfristig auftreten, dass ein höher automatisiertes Fahrzeug (HAF), insbesondere ein hochautomatisiertes Fahrzeug, über diese kurzfristigen Änderungen nicht schnell genug verfügen kann und die Steuerung des Fahrzeugs dem Fahrer überlassen werden muss. Dies kann unerwünscht und gegebenenfalls auch kritisch hinsichtlich der Verkehrssicherheit sein.

Um das Fahrzeug in möglichst allen Situationen höher automatisiert zu steuern, ist es also notwendig, eine weitestgehend fehlerfreie und der Wirklichkeit entsprechende digitale Karte zur Verfügung zu haben.

Dokument DE102004010197A1 offenbart ein Verfahren zur Kontrolle einer digitalen Karte. Dokument DE102008046683A1 offenbart ein Verfahren zur Erstellung von Qualitätsparametern für eine digitale Karte.

Es ist daher eine Aufgabe der vorliegenden Erfindung, ein verbessertes Verfahren zur Verifizierung einer digitalen Karte eines höher automatisierten Fahrzeugs (HAF), insbesondere eines hochautomatisierten Fahrzeugs, und ein verbessertes Fahrerassistenzsystem zur Steuerung eines höher automatisierten Fahrzeugs (HAF), insbesondere eines hochautomatisierten Fahrzeugs, bereitzustellen, mit dem die eine Aktualität einer digitalen Karte zuverlässig festgestellt werden kann.

### Offenbarung der Erfindung

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zur Verifizierung einer digitalen Karte eines höher automatisierten Fahrzeugs (HAF), insbesondere eines hochautomatisierten Fahrzeugs bereitgestellt, umfassend die folgenden Schritte:
S1 zur Verfügung stellen einer digitalen Karte, vorzugsweise einer hochgenauen digitalen Karte, in einem Fahrerassistenzsystem des HAF;
S2 Bestimmung einer aktuellen Fahrzeugposition und Lokalisierung der Fahrzeugposition in der digitalen Karte;
S3 zur Verfügung stellen von zumindest einer Soll-Merkmalseigenschaft zumindest eines Merkmals in einer Umgebung des HAF;
S4 Detektieren von zumindest einer Ist-Merkmalseigenschaft eines Merkmals in der Umgebung des HAF zumindest teilweise auf Grundlage der Soll-Merkmalseigenschaft, wobei das Detektieren mittels zumindest eines Sensors durchgeführt wird;
S5 Vergleich der Ist-Merkmalseigenschaft mit der Soll-Merkmalseigenschaft und Ermittlung zumindest eines Differenzwertes als Ergebnis des Vergleichs; und
S6 Verifizierung der digitalen Karte zumindest teilweise auf Grundlage des Differenzwertes, wobei die digitale Karte als nicht aktuell eingestuft wird, wenn der Differenzwert einen festgelegten Schwellwert einer Abweichung erreicht oder überschreitet, und als aktuell eingestuft wird, wenn der Differenzwert unterhalb des festgelegten Schwellwerts der Abweichung bleibt.

Durch die Vorgabe der Merkmale und Merkmalseigenschaften kann der Suchbereich der Fahrzeugsensorik bei der Erkennung der Merkmale im Fahrzeugumfeld von vornherein eingeschränkt werden, was ein robusteres Auffinden der Merkmale in der Umgebung des HAF und somit das Detektieren der Ist-Merkmalseigenschaften der Merkmale ermöglicht.

Durch den Vergleich der Soll-Merkmalseigenschaft mit der Ist-Merkmalseigenschaft kann ein mit der Übereinstimmung der Merkmalseigen-schaften korrespondierender Differenzwert ermittelt werden, der ein Maß für die Aktualität der Karte ist.

Schritt S6 beinhaltet, dass die digitale Karte als nicht aktuell eingestuft wird, wenn der Differenzwert einen festgelegten Schwellwert einer Abweichung erreicht oder überschreitet und als aktuell eingestuft wird, wenn der Differenzwert unterhalb des festgelegten Schwellwerts der Abweichung bleibt. Dabei richtet sich der Schwellwert des Differenzwertes hierbei beispielsweise nach der Natur der detektierten Merkmalseigenschaft, beispielsweise ob es sich dabei um eine Fahrbahnmarkierung (kurzfristige Änderung ist wahrscheinlicher, niedrige Fehlertoleranz) oder um eine Lichtsignalanlage (kurzfristige Änderung ist eher unwahrscheinlich, höhere Fehlertoleranz handelt).

Vorzugsweise beinhaltet das erfindungsgemäße Verfahren in einem weiteren Schritt S7 eine Übermittelung einer Information die Fahrzeugposition und den Differenzwert betreffend an einen zentralen Server.

Vorteilhafterweise wird in dem Fall, dass die Karte in Schritt S6 als nicht aktuell eingestuft wurde, eine Aktualisierung der digitalen Karte seitens des Fahrerassistenzsystems bei einem zentralen Server angefordert.

In einer bevorzugten Ausführungsform ist die zumindest eine Soll-Merkmalseigenschaft des zumindest einen Merkmals in der digitalen Karte gespeichert, wobei vorzugsweise eine Mehrzahl an Soll-Merkmalseigenschaften wiederum einer Mehrzahl an Merkmalen in der digitalen Karte gespeichert sind.

Für das weitere Vorgehen ist es in einer Ausführungsform der Erfindung vorteilhafterweise vorgesehen, dass der Schritt des zur Verfügung Stellens der Soll-Merkmalseigenschaft (S3) zumindest eines Merkmals die Auswahl eines von mehreren möglichen Merkmalen einschließt, wobei die Auswahl unter Berücksichtigung der folgenden Schritte durchgeführt wird.

In einem Schritt S3a wird Merkmalsmodell erstellt, wobei das Merkmalsmodell beschreibt, mit welchen zur Verfügung stehenden Sensoren und unter welchen Bedingungen, insbesondere unter welchem Beobachtungswinkel und/oder bei welcher Entfernung ein Merkmal beobachtet werden kann.

In einem Schritt S3b wird Sensormodell erstellt, wobei das Sensormodell beschreibt, welchen Teil der Karte die jeweils zur Verfügung stehenden Sensoren aktuell mit welcher Spezifikation, insbesondere mit welcher Auflösung und/oder mit welchem Rauschverhalten wahrnehmen können.

Ferner wird in einem Schritt S3c ein Umgebungsmodell erstellt, wobei das Umgebungsmodell beschreibt, ob ein Merkmal aktuell detektierbar oder es durch statische oder dynamische Objekte in der Umgebung des HAF verdeckt ist. Dabei werden Informationen betreffend statischer Objekte dabei aus der digitalen Karte entnommen, während dynamische Objekte aus aufbereiteten Sensordaten des zumindest einen Sensors ermittelt werden.

In einer weiteren Ausführungsform der Erfindung beinhaltet das Verfahren, dass das Verfahren ferner den Schritt einschließt, dass aus dem Merkmalsmodell, dem Sensormodell und dem Umgebungsmodell eine Erwartungshypothese für ein ausgewähltes Merkmal erstellt und in Schritt S4 mittels der Sensordaten verifiziert wird. Als vorteilhaft ist hier anzusehen, dass der Algorithmus bereits vor Beginn des Detektierens des Merkmals bzw. der Merkmalseigenschaft in der Umgebung eine sehr genaue Abschätzung dahingehend erlaubt, mit welcher Wahrscheinlichkeit das entsprechende Merkmal auch gefunden werden kann. So kann beispielsweise vorab festgestellt werden, ob überhaupt eine Detektion des gesuchten Merkmals möglich ist, ob es etwa noch außerhalb der Sensorreichweite liegt oder von dynamischen (bspw. andere Verkehrsteilnehmer) und/oder statischen Objekten verdeckt ist.

Vorteilhafter weise ist das Merkmal eine a-priori-Information, die beispielsweise in der digitalen Karte enthalten ist. Beispiele für Merkmale sind eine Straßenmarkierung, ein Leitpfosten, eine Leitplanke, eine Lichtsignalanlage, ein Verkehrszeichen, ein befahrbarer Raum, eine Verkehrsdichte, ein 3D-Weltmodell und/oder ein Geschwindigkeitsprofil.

Vorteilhafterweise sind die Soll-Merkmalseigenschaft sowie die Ist-Merkmalseigenschaft jeweils zumindest eine Eigenschaft der folgenden Eigenschaften des Merkmals sind: geographische Position, Abmessungen, Farbe, relative Lage bezüglich des HAF.

Einen weiteren Gegenstand der Erfindung bildet ein Fahrerassistenzsystem zur Steuerung eines höher automatisierten Fahrzeugs (HAF), insbesondere eines hochautomatisierten Fahrzeugs. Dabei umfasst das Fahrerassistenzsystem zumindest einen Sensor zur Erfassung einer Ist-Merkmalseigenschaft eines Merkmals in der Umgebung des HAF, ein Speichermodul zur Speicherung einer digitalen Karte, vorzugsweise einer hochgenauen digitalen Karte, ein Positionsmodul zur Bestimmung einer Fahrzeugposition des HAF, und eine Steuervorrichtung. Das Speichermodul ist insbesondere ein in das HAF integriertes Speichermodul oder ein zentraler Server. Das Positionsmodul ist vorzugsweise ein GPS-Modul (Global Positioning System) ist. Die Steuervorrichtung ist dazu eingerichtet, Daten mit dem Speichermodul und dem Positionsmodul auszutauschen und die durch das Positionsmodul bestimmte Fahrzeugposition in der digitalen Karte zu lokalisieren. Erfindungsgemäß ist vorgesehen, dass die Steuervorrichtung derart eingerichtet ist, dass sie ein oben beschriebenes und in den Ansprüchen 1 bis 8 beanspruchtes Verfahren durchführen kann.

Ferner bildet auch Computerprogramm, umfassend Programmcode zur Durchführung des Verfahrens nach einem der Ansprüche 1 bis 7, wenn das Computerprogramm auf einem Computer ausgeführt wird, einen Gegenstand der Erfindung.

Obwohl die vorliegende Erfindung im Folgenden hauptsächlich in Zusammenhang mit Personenkraftwagen beschrieben wird, ist sie darauf nicht beschränkt, sondern kann mit jeder Art von Fahrzeug Lastkraftfahrzeuge (LKW) und/oder Personenkraftwagen (PKW) genutzt werden.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt ist. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand eines bevorzugten Ausführungsbeispiels näher erläutert, wobei für gleiche Merkmale gleiche Bezugszeichen verwendet werden. Die Zeichnungen sind schematisch und zeigen:

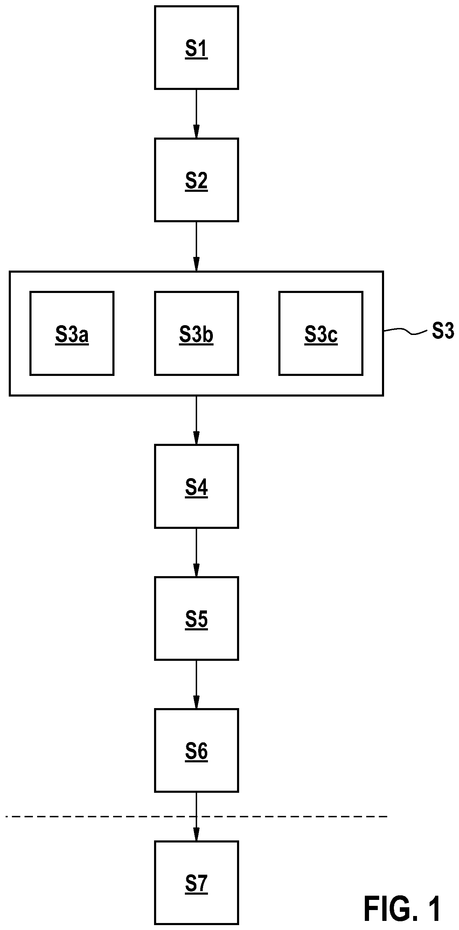

- Fig. 1: ein Ablaufschema einer ersten Ausführungsform des erfindungsgemäßen Verfahrens.

In Schritt S1 der Figur 1 wird eine digitale Karte, vorzugsweise eine hochgenaue digitale Karte zur Verfügung gestellt, was vorrichtungsseitig in einem Speichermodul zur Speicherung der digitalen Karte geschehen kann, wobei das Speichermodul insbesondere ein in das HAF integriertes Speichermodul oder ein zentraler Server ist.

Schritt S2 beinhaltet die Bestimmung einer aktuellen Fahrzeugposition und Lokalisierung der Fahrzeugposition in der digitalen Karte, wie es im Stand der Technik hinreichend bekannt ist. Vorrichtungsseitig geschieht dies erfindungsgemäß mittels eines Positionsmoduls, wobei das Positionsmodul vorzugsweise ein GPS-Modul (Global Positioning System) ist.

Der in Figur 1 als S3 bezeichnete Schritt umfasst das zur Verfügung stellen von zumindest einer Soll-Merkmalseigenschaft zumindest eines Merkmals in einer Umgebung des HAF. Soll-Merkmalseigenschaften von Merkmalen, beispielsweise von Fahrbahnmittelmarkierungen, sind beispielsweise deren geographische Position, Abmessungen, Farbe und ihre relative Lage bezüglich des HAF. Dabei ist es vorteilhaft, wenn die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind.

Der mit Schritt S4 bezeichnete Verfahrensschritt der Erfindung umfasst das Detektieren von zumindest einer Ist-Merkmalseigenschaft eines Merkmals in der Umgebung des HAF zumindest teilweise auf Grundlage der Soll-Merkmalseigenschaft. Vorrichtungsmäßig ist hierfür zumindest ein Sensor zur Erfassung der Ist-Merkmalseigenschaft des Merkmals in der Umgebung des HAF vorgesehen sowie eine Steuervorrichtung, die unter anderem dazu eingerichtet ist, Daten mit dem zumindest einen Sensor, dem Speichermodul und dem Positionsmodul auszutauschen und die durch das Positionsmodul bestimmte Fahrzeugposition in der digitalen Karte zu lokalisieren. Der Sensor ist dabei aus der Gruppe der folgenden Sensoren ausgewählt: Beschleunigungssensoren, Kamerasensoren, Radarsensoren, Lidarsensoren.

Vorteilhaft hierbei ist, dass die Sensorik durch die Einschränkung des Suchbereichs durch die Soll-Merkmalseigenschaften schnelle Ergebnisse liefert und robust funktioniert.

Erfindungsgemäß wird nun in Schritt S5 ein Vergleich der Ist-Merkmalseigenschaften der Merkmale 110 mit den Soll-Merkmalseigenschaften der Merkmale 120 durchgeführt. Als Ergebnis liefert der Schritt S5 zumindest einen Differenzwert, der als Grundlage einer in Schritt S6 durchgeführten Verifizierung der digitalen Karte dient. Hierbei wird die digitale Karte als nicht aktuell eingestuft, wenn der Differenzwert einen festgelegten Schwellwert einer Abweichung erreicht oder überschreitet, und als aktuell eingestuft, wenn der Differenzwert unterhalb des festgelegten Schwellwerts der Abweichung bleibt.

In dem Fall, dass die Karte in Schritt S6 als nicht aktuell eingestuft wurde, kann einer Ausführungsform der Erfindung gemäß eine Übermittlung einer Information die Fahrzeugposition und den Differenzwert betreffend an einen zentralen Server erfolgen. Ebenfalls kann eine Aktualisierung der digitalen Karte seitens des Fahrerassistenzsystems bei einem zentralen Server angefordert werden.

Ein vorteilhafter Effekt der Erfindung ist es, dass Kartierungsdienste diese Information als Indikator verwenden können, ob eine Neukartierung eines bestimmten Kartenabschnitts notwendig ist. Die ermöglicht eine effiziente Planung der teuren Kartierungsfahrten durch den Kartierungsdienst.

In einer vorteilhaften Ausgestaltung der Erfindung umfasst der Schritt S3 des zur Verfügung Stellens der Soll-Merkmalseigenschaft zumindest eines Merkmals die Auswahl zumindest eines von einer Vielzahl von möglichen Merkmalen, wobei die Auswahl unter Berücksichtigung der folgenden Schritte durchgeführt wird:
S3a Erstellen eines Merkmalsmodells, wobei das Merkmalsmodell beschreibt, mit welchen zur Verfügung stehenden Sensoren und unter welchen Bedingungen, insbesondere unter welchem Beobachtungswinkel und/oder bei welcher Entfernung ein Merkmal beobachtet werden kann;
S3b Erstellen eines Sensormodells, wobei das Sensormodell beschreibt, welchen Teil der Karte die jeweils zur Verfügung stehenden Sensoren aktuell mit welcher Spezifikation, insbesondere mit welcher Auflösung und/oder mit welchem Rauschverhalten wahrnehmen können;
S3c Erstellen eines Umgebungsmodells, wobei das Umgebungsmodell beschreibt, ob ein Merkmal aktuell detektierbar oder es durch statische oder dynamische Objekte in der Umgebung des HAF verdeckt ist., wobei Informationen betreffend statischer Objekte dabei aus der digitalen Karte entnommen werden, während dynamische Objekte aus aufbereiteten Sensordaten des zumindest einen Sensors ermittelt werden.

Weiterführend ist in einer Ausführungsform der Erfindung vorgesehen, dass das Verfahren den Schritt einschließt, dass aus dem Merkmalsmodell, dem Sensormodell und dem Umgebungsmodell eine Erwartungshypothese für ein ausgewähltes Merkmal erstellt und in Schritt S4 verifiziert wird.

Auf diese Weise kann bereits vor der Beginn der Detektierung der zumindest einen Ist-Merkmalseigenschaft mit hoher Wahrscheinlichkeit vorausgesagt werden, ob eine Detektion zu erwarten ist und um welche Art von Detektion es sich handelt.

In einer Ausführungsform der Erfindung ist vorgesehen, dass eine Vielzahl von Sensoren zur Detektierung der zumindest einen Merkmalseigenschaft verwendet wird. Dementsprechend umfasst in dieser Ausführungsform der Schritt S6 der Verifizierung der digitalen Karte unter Durchführung einer Fusion der Detektionsergebnisse der an der Detektion beteiligten Sensoren.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

## Patentansprüche

1. Verfahren zur Verifizierung einer digitalen Karte eines höher automatisierten Fahrzeugs -HAF-, insbesondere eines hochautomatisierten Fahrzeugs, umfassend die Schritte:
S1 zur Verfügung stellen einer digitalen Karte, vorzugsweise einer hochgenauen digitalen Karte, in einem Fahrerassistenzsystem des HAF;
S2 Bestimmung einer aktuellen Fahrzeugposition und Lokalisierung der Fahrzeugposition in der digitalen Karte;
S3 zur Verfügung stellen von zumindest einer Soll-Merkmalseigenschaft zumindest eines Merkmals in einer Umgebung des HAF;
S4 Detektieren von zumindest einer Ist-Merkmalseigenschaft eines Merkmals in der Umgebung des HAF zumindest teilweise auf Grundlage der Soll-Merkmalseigenschaft, wobei das Detektieren mittels zumindest eines Sensors durchgeführt wird;
S5 Vergleich der Ist-Merkmalseigenschaft mit der Soll-Merkmalseigenschaft und Ermittlung zumindest eines Differenzwertes als Ergebnis des Vergleichs;
S6 Verifizierung der digitalen Karte zumindest teilweise auf Grundlage des Differenzwertes, wobei die digitale Karte als nicht aktuell eingestuft wird, wenn der Differenzwert einen festgelegten Schwellwert einer Abweichung erreicht oder überschreitet, und als aktuell eingestuft wird, wenn der Differenzwert unterhalb des festgelegten Schwellwerts der Abweichung bleibt.

2. Verfahren nach Anspruch 1, **dadurch gekennzeichnet, dass** das Verfahren des weiteren den folgenden Schritt umfasst:
S7 Übermitteln einer Information die Fahrzeugposition und den Differenzwert betreffend an einen zentralen Server.

3. Verfahren nach einem der vorstehenden Ansprüche, **dadurch gekennzeichnet, dass** in dem Fall, dass die Karte in Schritt S6 als nicht aktuell eingestuft wurde, eine Aktualisierung der digitalen Karte seitens des Fahrerassistenzsystems bei einem zentralen Server angefordert wird.

4. Verfahren nach einem der vorstehenden Ansprüche, **dadurch gekennzeichnet, dass** die zumindest eine Soll-Merkmalseigenschaft des zumindest einen Merkmals in der digitalen Karte gespeichert ist, wobei vorzugsweise eine Mehrzahl an Soll-Merkmalseigenschaften wiederum einer Mehrzahl an Merkmalen in der digitalen Karte gespeichert sind.

5. Verfahren nach einem der vorstehenden Ansprüche, **dadurch gekennzeichnet, dass** eine Vielzahl von Sensoren zur Detektierung der zumindest einen Merkmalseigenschaft verwendet wird.

6. Verfahren nach einem der vorstehenden Ansprüche, **dadurch gekennzeichnet, dass** der Schritt S3 des zur Verfügung Stellens der Soll-Merkmalseigenschaft zumindest eines Merkmals die Auswahl zumindest eines von einer Vielzahl möglicher Merkmalen einschließt, wobei die Auswahl unter Berücksichtigung der folgenden Schritte durchgeführt wird:
S3a Erstellen eines Merkmalsmodells, wobei das Merkmalsmodell beschreibt, mit welchen zur Verfügung stehenden Sensoren und unter welchen Bedingungen, insbesondere unter welchem Beobachtungswinkel und/oder bei welcher Entfernung ein Merkmal beobachtet werden kann;
S3b Erstellen eines Sensormodells, wobei das Sensormodell beschreibt, welchen Teil der Karte die jeweils zur Verfügung stehenden Sensoren aktuell mit welcher Spezifikation, insbesondere mit welcher Auflösung und/oder mit welchem Rauschverhalten wahrnehmen können;
S3c Erstellen eines Umgebungsmodells, wobei das Umgebungsmodell beschreibt, ob ein Merkmal aktuell detektierbar oder es durch statische oder dynamische Objekte in der Umgebung des HAF verdeckt ist; wobei Informationen betreffend statischer Objekte dabei aus der digitalen Karte entnommen werden, während dynamische Objekte aus aufbereiteten Sensordaten des zumindest einen Sensors ermittelt werden.

7. Verfahren nach Anspruch 6, **dadurch gekennzeichnet, dass** das Verfahren den Schritt einschließt, dass aus dem Merkmalsmodell, dem Sensormodell und dem Umgebungsmodell eine Erwartungshypothese für ein ausgewähltes Merkmal erstellt und in Schritt S4 verifiziert wird.

8. Verfahren nach Anspruch einem der vorstehenden Ansprüche, **dadurch gekennzeichnet, dass** das Merkmal eine Straßenmarkierung, ein Leitpfosten, eine Leitplanke, eine Lichtsignalanlage, ein Verkehrszeichen, ein befahrbarer Raum, eine Verkehrsdichte, ein 3D-Weltmodell und/oder ein Geschwindigkeitsprofil ist.

9. Verfahren nach einem der vorstehenden Ansprüche, **dadurch gekennzeichnet, dass** die Soll-Merkmalseigenschaft sowie die Ist-Merkmalseigenschaft jeweils zumindest eine Eigenschaft der folgenden Eigenschaften des Merkmals sind: geographische Position, Abmessungen, Farbe, relative Lage bezüglich des HAF.

10. Fahrerassistenzsystem zur Steuerung eines höher automatisierten Fahrzeugs -HAF-, insbesondere eines hochautomatisierten Fahrzeugs, umfassend
• zumindest einen Sensor zur Erfassung einer Ist-Merkmalseigenschaft eines Merkmals in der Umgebung des HAF;
• ein Speichermodul zur Speicherung einer digitalen Karte, vorzugsweise einer hochgenauen digitalen Karte, wobei das Speichermodul insbesondere ein in das HAF integriertes Speichermodul oder ein zentraler Server ist;
• ein Positionsmodul zur Bestimmung einer Fahrzeugposition des HAF, wobei das Positionsmodul vorzugsweise ein GPS-Modul (Global Positioning System) ist;
• eine Steuervorrichtung, die dazu eingerichtet ist, Daten mit dem Speichermodul, dem Sensor und dem Positionsmodul auszutauschen und die durch das Positionsmodul bestimmte Fahrzeugposition in der digitalen Karte zu lokalisieren,
**dadurch gekennzeichnet, dass**
die Steuervorrichtung zur Durchführung eines Verfahrens nach einem der Ansprüche 1 bis 9 eingerichtet ist.

11. Computerprogramm, umfassend Programmcode zur Durchführung des Verfahrens nach einem der Ansprüche 1 bis 9, wenn das Computerprogramm auf einem Computer ausgeführt wird.

## Claims

1. Method for verifying a digital map of a highly automated vehicle -HAV-, comprising the following steps:
S1 providing a digital map, preferably a highly accurate digital map, in a driver assistance system of the HAV;
S2 determining a current vehicle position and locating the vehicle position in the digital map;
S3 providing at least one target feature property of at least one feature in surroundings of the HAV;
S4 detecting at least one actual feature property of a feature in the surroundings of the HAV, at least partially on the basis of the target feature property, wherein the detection is performed by way of at least one sensor;
S5 comparing the actual feature property with the target feature property and ascertaining at least one difference value as a result of the comparison;
S6 verifying the digital map at least partially on the basis of the difference value, wherein the digital map is classified as not up-to-date if the difference value reaches or exceeds a defined threshold value for a deviation, and is classified as up-to-date if the difference value remains below the defined threshold value for the deviation.

2. Method according to Claim 1, **characterized in that** the method furthermore comprises the following step:
S7 transmitting information relating to the vehicle position and relating to the difference value to a central server.

3. Method according to either of the preceding claims, **characterized in that**, in the event that the map was classified as not up-to-date in step S6, the driver assistance system asks a central server to update the digital map.

4. Method according to one of the preceding claims, **characterized in that** the at least one target feature property of the at least one feature is stored in the digital map, wherein a multiplicity of target feature properties of in turn a multiplicity of features are preferably stored in the digital map.

5. Method according to one of the preceding claims, **characterized in that** a plurality of sensors are used to detect the at least one feature property.

6. Method according to one of the preceding claims, **characterized in that** step S3 of providing the target feature property of at least one feature includes selecting at least one of a plurality of possible features, wherein the selection is performed taking into consideration the following steps:
S3a creating a feature model, wherein the feature model describes with which available sensors and under what conditions, in particular at what observation angle and/or at what distance, a feature is able to be observed;
S3b creating a sensor model, wherein the sensor model describes what part of the map the respectively available sensors are currently able to perceive with what specification, in particular with what resolution and/or with what noise ratio;
S3c creating a surroundings model, wherein the surroundings model describes whether a feature is currently able to be detected or is concealed by static or dynamic objects in the surroundings of the HAV; wherein information about static objects is in this case taken from the digital map, while dynamic objects are ascertained from processed sensor data from the at least one sensor.

7. Method according to Claim 6, **characterized in that** the method includes the step of creating an expected hypothesis for a selected feature from the feature model, the sensor model and the surroundings model and verifying said expected hypothesis in step S4.

8. Method according to one of the preceding claims, **characterized in that** the feature is a road marking, a reflector post, a crash barrier, a light signalling system, a road sign, a travelable space, a traffic density, a 3D world model and/or a speed profile.

9. Method according to one of the preceding claims, **characterized in that** the target feature property and the actual feature property are each at least one property from the following properties of the feature: geographical position, dimensions, colour, relative position in relation to the HAV.

10. Driver assistance system for controlling a highly automated vehicle -HAV-, comprising:
• at least one sensor for detecting an actual feature property of a feature in the surroundings of the HAV;
• a storage module for storing a digital map, preferably a highly accurate digital map, wherein the storage module is in particular a storage module integrated into the HAV or a central server;
• a position module for determining a vehicle position of the HAV, wherein the position module is preferably a GPS (global positioning system) module;
• a control device that is designed to exchange data with the storage module, the sensor and the position module and to locate the vehicle position, determined by the position module, in the digital map,
**characterized in that**
the control device is designed to perform a method according to one of Claims 1 to 9.

11. Computer program comprising program code for performing the method according to one of Claims 1 to 9 when the computer program is executed on a computer.

## Revendications

1. Procédé de vérification d'une carte numérique d'un véhicule plus fortement automatisé HAF, notamment d'un véhicule fortement automatisé, ledit procédé comprenant les étapes suivantes :
S1 fournir une carte numérique, de préférence une carte numérique de haute précision, dans un système d'aide à la conduite du véhicule HAF ;
S2 déterminer la position actuelle du véhicule et localiser la position du véhicule sur la carte numérique ;
S3 fournir au moins une propriété de caractéristique cible d'au moins une caractéristique dans un environnement du véhicule HAF ;
S4 détecter au moins une propriété de caractéristique réelle d'une caractéristique dans l'environnement du véhicule HAF au moins partiellement sur la base de la propriété de caractéristique cible, la détection étant effectuée au moyen d'au moins un capteur ;
S5 comparer la propriété de caractéristique réelle à la propriété de caractéristique cible et déterminer au moins une valeur de différence comme résultat de la comparaison ;
S6 vérifier la carte numérique au moins partiellement sur la base de la valeur de différence, la carte numérique étant classée comme non à jour si la valeur de différence atteint ou dépasse une valeur seuil définie d'un écart, et étant classée comme à ce jour si la valeur de différence reste inférieure à la valeur seuil définie de l'écart.

2. Procédé selon la revendication 1, **caractérisé en ce que** le procédé comprend en outre l'étape suivante : S7 transmettre à un serveur central une information relative à la position du véhicule et à la valeur de la différence.

3. Procédé selon l'une des revendications précédentes, **caractérisé en ce que**, dans le cas où la carte a été classée comme non à jour à l'étape S6, une mise à jour de la carte numérique par le système d'aide à la conduite est demandée à un serveur central.

4. Procédé selon l'une des revendications précédentes, **caractérisé en ce que** l'au moins une propriété de caractéristique cible de l'au moins une caractéristique est mémorisée dans la carte numérique, de préférence une pluralité de propriétés de caractéristique cibles là encore d'une pluralité de caractéristiques étant mémorisées dans la carte numérique.

5. Procédé selon l'une des revendications précédentes, **caractérisé en ce qu'**une pluralité de capteurs est utilisée pour détecter l'au moins une propriété de caractéristique.

6. Procédé selon l'une des revendications précédentes, **caractérisé en ce que** l'étape S3 visant à fournir la propriété de caractéristique cible d'au moins une caractéristique comprend la sélection d'au moins une caractéristique parmi un grand nombre de caractéristiques possibles, la sélection étant effectuée avec prise en compte des étapes suivantes :
S3a créer un modèle de caractéristique, le modèle de caractéristique décrivant avec quels capteurs disponibles et dans quelles conditions, notamment avec quel angle d'observation et/ou à quelle distance une caractéristique peut être observée ;
S3b créer un modèle de capteur, le modèle de capteur décrivant quelle partie de la carte peut actuellement être perçue par les capteurs respectivement disponibles, et ce avec quelle spécification, notamment quelle résolution et/ou quel comportement de bruit ;
S3c créer un modèle d'environnement, le modèle d'environnement décrivant si une caractéristique peut actuellement être détectée ou si elle est cachée par des objets statiques ou dynamiques dans l'environnement du véhicule HAF ; des informations relatives aux objets statiques étant extraites de la carte numérique, tandis que des objets dynamiques étant déterminés à partir de données de capteur traitées de l'au moins un capteur.

7. Procédé selon la revendication 6, **caractérisé en ce que** le procédé comprend l'étape visant à créer une hypothèse d'attente d'une caractéristique sélectionnée à partir du modèle de caractéristique, du modèle de capteur et du modèle d'environnement et à la vérifier à l'étape S4.

8. Procédé selon l'une des revendications précédentes, **caractérisé en ce que** la caractéristique est un marquage routier, un poteau de délimitation, un rail de sécurité, un système de signalisation lumineuse, un panneau de signalisation, une zone carrossable, une densité de trafic, un modèle mondial 3D et/ou un profil de vitesse.

9. Procédé selon l'une des revendications précédentes, **caractérisé en ce que** la propriété de caractéristique cible et la propriété de caractéristique réelle sont chacune au moins une propriété parmi les propriétés suivantes de la caractéristique : position géographique, dimensions, couleur, position relative par rapport au véhicule HAF.

10. Système d'aide à la conduite destiné à commander un véhicule plus fortement automatisé HAF, notamment un véhicule fortement automatisé, ledit système comprenant
• au moins un capteur destiné à détecter une propriété de caractéristique réelle d'une caractéristique dans l'environnement du véhicule HAF ;
• un module de mémorisation destiné à mémoriser une carte numérique, de préférence une carte numérique de haute précision, le module de mémorisation étant notamment un module de mémorisation intégré au véhicule HAF ou un serveur central ;
• un module de position destiné à déterminer une position du véhicule HAF, le module de position étant de préférence un module GPS (Global Positioning System) ;
• un dispositif de commande qui est conçu pour échanger des données avec le module de mémorisation, le capteur et le module de position et localiser sur la carte numérique la position du véhicule déterminée par le module de position,
**caractérisé en ce que**
le dispositif de commande est conçu pour mettre en œuvre un procédé selon l'une des revendications 1 à 9.

11. Logiciel, comprenant un code programme destiné à mettre en œuvre le procédé selon l'une des revendications 1 à 9, lorsque le logiciel est exécuté sur un ordinateur.
